(19) Europäisches Patentamt / European Patent Office / Office européen des brevets

(11) **EP 2 545 971 A2**

(12) **EUROPEAN PATENT APPLICATION**

(43) Date of publication:
**16.01.2013 Bulletin 2013/03**

(51) Int Cl.:
***A63F 13/10*** *(2006.01)*

(21) Application number: **12002286.8**

(22) Date of filing: **29.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.03.2011 JP 2011081019**

(71) Applicant: **Konami Digital Entertainment Co., Ltd. Tokyo 107-8324 (JP)**

(72) Inventors:
• **Lida, Shutaro**
  **Tokyo 107-8324 (JP)**
• **Aoyama, Massaya**
  **Tokyo 107-8324 (JP)**
• **Ishida, Zenta**
  **Tokyo 107-8324 (JP)**

(74) Representative: **Müller-Boré & Partner Patentanwälte**
  **Grafinger Straße 2**
  **81671 München (DE)**

(54) **Game device, game device control method, program, and information storage medium**

(57) Provided is a game device capable of making a character object placed in a virtual space perform a plurality of actions in succession while reducing an increase in data amount. If a first operation is made, a first object control portion (64) causes a player character object representing a player character to perform a first action. If a second operation is made while the player character object is performing the first action, a second object control portion (66) places a player character object representing the player character in the virtual space separately from the player character object that performs the first action, and causes the separately placed player character object to perform a second action. A display unit displays a screen showing a picture obtained by viewing from a virtual camera the virtual space where the player character object that performs the first action and the player character object that performs the second action are both placed.

FIG.1

EP 2 545 971 A2

**Description**

BACKGROUND OF THE INVENTION

1. Field of the Invention

The present invention relates to a game device, a game device control method, a program, and an information storage medium.

2. Description of the Related Art

A type of game device has been known which displays on display unit, as a game screen of a game whose player character acts based on an operation of a player, a screen that shows a picture obtained by viewing from a virtual camera a virtual space where a player character object representing the player character is placed (for example, JP 2003-024633 A). A game device of this type plays, for example, animation data that defines changes in posture that occur to the player character object while in action (in other words, changes the posture of the player character object in accordance with the animation data), to thereby make the player character object perform an action. As a result, the player character taking an action is displayed on the game screen.

SUMMARY OF THE INVENTION

To make the player character object perform a first action and a second action in succession, the game device plays first animation data which corresponds to the first action, and then plays second animation data which corresponds to the second action. However, in the case where the posture of the player character object at the time the first action is completed (i.e., at the time the first animation data finishes playing) differs from the posture of the player character object at the time the second action begins (i.e., at the time the second animation data starts playing), the game device needs animation data for smoothly changing the posture of the player character object from the one at the end of the first action to the one at the start of the second action (hereinafter, referred to as "intermediate animation data"). In short, the game device in this case needs to play the first animation data, then the intermediate animation data, and then the second animation data.

Intermediate animation data is required for every combination of actions that might be performed by the player character object in succession. Many combinations of such actions equal many pieces of intermediate animation data, and the amount of data increases as a result.

The present invention has been made in view of the above-mentioned problem, and an object of the present invention is therefore to provide a game device, a game device control method, a program, and an information storage medium which are capable of making a character object placed in a virtual space perform a plurality of actions in succession while reducing an increase in data amount.

In order to solve the above-mentioned problem, according to the present invention, there is provided a game device for displaying, on display means, as a game screen of a game in which a player character acts based on an operation of a player, a screen that shows a picture obtained by viewing from a virtual camera a virtual space where a player character object representing the player character is placed, including: first object control means for causing, in a case where the player makes a first operation, the player character object representing the player character to perform a first action associated with the first operation; second object control means for placing, in a case where the player makes a second operation while the player character object is performing the first action, a player character object representing the player character in the virtual space separately from the player character object that performs the first action, and causing the separately placed player character object to perform a second action associated with the second operation; and display control means for controlling the display means to display, as the game screen, a screen showing a picture obtained by viewing from the virtual camera the virtual space where the player character object that performs the first action and the player character object that performs the second action are both placed.

According to the present invention, there is also provided a game device control method for displaying, on display means, as a game screen of a game in which a player character acts based on an operation of a player, a screen that shows a picture obtained by viewing from a virtual camera a virtual space where a player character object representing the player character is placed, including: causing, in a case where the player makes a first operation, the player character object representing the player character to perform a first action associated with the first operation; placing, in a case where the player makes a second operation while the player character object is performing the first action, a player character object representing the player character in the virtual space separately from the player character object that performs the first action, and causing the separately placed player character object to perform a second action associated with the second operation; and controlling the display means to display, as the game screen, a screen showing a picture obtained by viewing from the virtual camera the virtual space where the player character object that performs the first action and the player character object that performs the second action are both placed.

According to the present invention, there is also provided a program for causing a computer to function as a game device for displaying, on display means, as a game screen of a game in which a player character acts based on an operation of a player, a screen that shows a picture obtained by viewing from a virtual camera a virtual space where a player character object representing the player character is placed, the program causing the computer to function as: first object control means for causing, in a case where the player makes a first operation, the player character object representing the player character to perform a first action associated with the first operation; second object control means for placing, in a case where the player makes a second operation while the player character object is performing the first action, a player character object representing the player character in the virtual space separately from the player character object that performs the first action, and causing the separately placed player character object to perform a second action associated with the second operation; and display control means for controlling the display means to display, as the game screen, a screen showing a picture obtained by viewing from the virtual camera the virtual space where the player character object that performs the first action and the player character object that performs the second action are both placed.

According to the present invention, there is also provided a computer-readable information storage medium storing the above-mentioned program.

According to the present invention, it is possible, for example, to make a game character placed in a virtual space perform a plurality of actions in succession while reducing an increase in data amount.

According to an aspect of the present invention, the second object control means may set a position of the player character object that is placed separately from the player character object that performs the first action based on a position that the player character object that performs the first action is in when the second operation is made.

According to another aspect of the present invention, the game may involve a fight between the player character and another character. An other-character object representing the other character may be placed in the virtual space. The first action and the second action may be actions of attacks on the other-character object. The game device may further include update means for updating a parameter that is updated in a case where an attack executed by the player character object hits the other-character object and that is stored in means for storing the parameter. In a case where the player character object that performs the first action and the player character object that performs the second action are both placed in the virtual space, the update means may update the parameter based on both a result of determining whether or not an attack executed by the player character object that performs the first action has hit the other-character object, and a result of determining whether or not an attack executed by the player character object that performs the second action has hit the other-character object.

According to still another aspect of the present invention, the game may involve a fight between the player character and another character. An other-character object representing the other character may be placed in the virtual space. The game device may further include update means for updating a parameter that is updated in a case where an attack executed by the other-character object hits the player character object and that is stored in means for storing the parameter. In a case where the player character object that performs the first action and the player character object that performs the second action are both placed in the virtual space, the update means may be configured to execute an update of the parameter based on one of a result of determining whether or not an attack executed by the other-character object has hit the player character object that performs the first action, and a result of determining whether or not an attack executed by the other-character object has hit the player character object that performs the second action, and not to execute an update of the parameter based on another result thereof.

According to yet another aspect of the present invention, in a case where the player character object that performs the first action and the player character object that performs the second action are both placed in the virtual space, the display control means raises with time a transparency of the player character object that performs the first action, and lowers with time a transparency of the player character object that performs the second action.

According to yet another aspect of the present invention, the game may involve a fight between the player character and another character. An other-character object representing the other character may be placed in the virtual space. The first action and the second action may be actions of attacks on the other-character object. The game device may further include update means for updating a parameter that is updated in a case where an attack executed by the player character object hits the other-character object and that is stored in means for storing the parameter. The update means may include at least one of: means for setting an update amount of the parameter in a case where an attack executed by the player character object that performs the first action hits the other-character object to an amount corresponding to the transparency of the player character object that performs the first action; and means for setting an update amount of the parameter in a case where an attack executed by the player character object that performs the second action hits the other-character object to an amount corresponding to the transparency of the player character object that performs the second action.

According to yet another aspect of the present invention, the game may involve a fight between the player character and another character. An other-character object representing the other character may be placed in the virtual space. The game device may further include update means for updating a parameter that is updated in a case where an attack executed by the other-character object hits the player character object and that is stored in means for storing the parameter. The update means may include at least one of: means for setting an update amount of the parameter in a case where an attack executed by the other-character object hits the player character object that performs the first action to an amount corresponding to the transparency of the player character object that performs the first action; and means for setting an update amount of the parameter in a case where an attack executed by the other-character object hits the player character object that performs the second action to an amount corresponding to the transparency of the player character object that performs the second action.

According to yet another aspect of the present invention, in a case where the player character object that performs the first action and the player character object that performs the second action are both placed in the virtual space, the display control means may set different colors to the player character object that performs the first action and the player character object that performs the second action.

According to yet another aspect of the present invention, the game device may further include any one of: means for removing, in a case where the player character object that performs the first action and the player character object that performs the second action are both placed in the virtual space, the player character object that has performed the first action from the virtual space if the player character obj ect that performs the first action finishes the first action; means for removing, in the case where the player character object that performs the first action and the player character object that performs the second action are both placed in the virtual space, the player character object that has performed the second action from the virtual space if the player character object that performs the second action finishes the second action; and means for removing, in the case where the player character obj ect that performs the first action and the player character object that performs the second action are both placed in the virtual space, the player character object that has performed the first action from the virtual space if the player character object that performs the first action finishes the first actionbefore the player character object that performs the second action finishes the second action, and for removing the player character object that has performed the second action from the virtual space if the player character object that performs the second action finishes the second action before the player character object that performs the first action finishes the first action.

BRIEF DESCRIPTION OF THE DRAWINGS

In the accompanying drawings:

FIG. 1 is a diagram illustrating the hardware configuration of a game device according to an embodiment of the present invention;
FIGS. 2A and 2B are diagrams illustrating an example of a controller;

FIG. 3 is a diagram illustrating an example of a virtual space;
FIG. 4 is a diagram illustrating an example of the association relation between an attack instruction operation and an attack action;
FIG. 5 is a diagram illustrating another example of the virtual space;
FIG. 6 is a diagram illustrating still another example of the virtual space;
FIG. 7 is a functional block diagram of the game device according to the embodiment of the present invention;
FIG. 8 is a diagram illustrating an example of data for managing a player character object;
FIG. 9 is a flow chart illustrating an example of processing executed by the game device;
FIG. 10 is a flow chart illustrating another example of processing executed by the game device; and
FIG. 11 is a flow chart illustrating still another example of processing executed by the game device.

DETAILED DESCRIPTION OF THE INVENTION

Hereinbelow, detailed description is given of an exemplary embodiment of the present invention based on the accompanying drawings. A game device according to the embodiment of the present invention is implemented by, for example, a consumer game machine (stationary game machine), a portable game machine, a mobile phone, a personal digital assistant (PDA), or a personal computer. In this specification, description is given of a case where the game device according to the embodiment of the present invention is implemented by a consumer game machine.

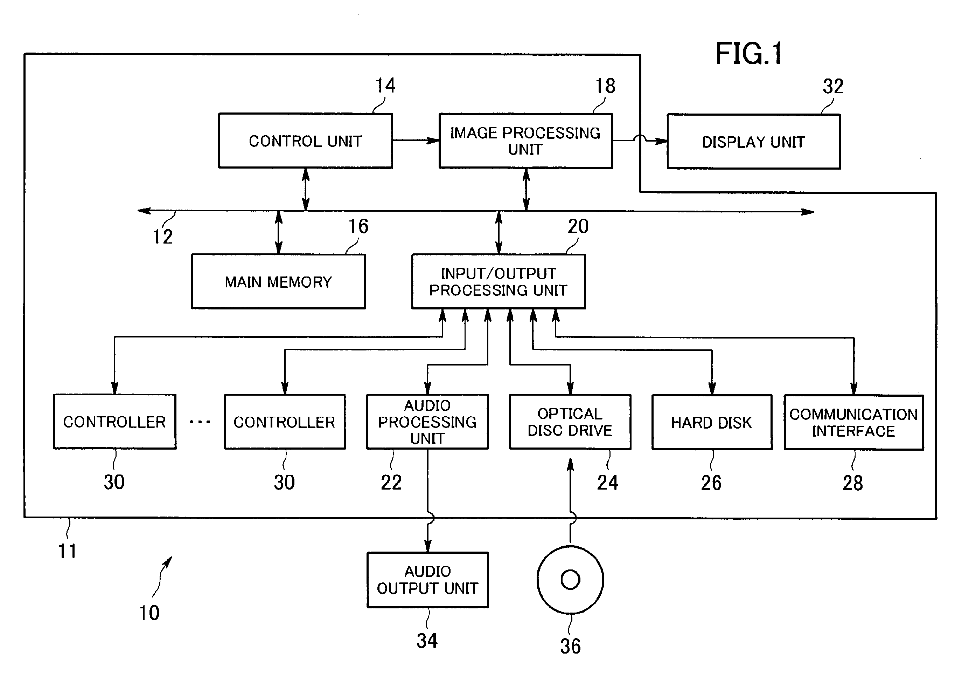

FIG. 1 illustrates a hardware configuration of the game device according to the embodiment of the present invention. A game device 10 illustrated in FIG. 1 includes a consumer game machine 11, a display unit 32, an audio output unit 34, and an optical disc 36 (information storage medium). The display unit 32 and the audio output unit 34 are connected to the consumer game machine 11. For example, a home-use television set or a liquid crystal display is used as the display unit 32. For example, a speaker or a headphone built into the home-use television set is used as the audio output unit 34.

The consumer game machine 11 is a publicly-known computer system. The consumer game machine 11 includes a bus 12, a control unit 14, a main memory 16, an image processing unit 18, an input/output processing unit 20, an audio processing unit 22, an optical disc drive 24, a hard disk 26, a communication interface 28, and a controller 30.

The control unit 14 includes at least one microprocessor. The control unit 14 executes information processing based on a program read from the optical disc 36. The main memory 16 includes a RAM, for example, and programs and data read from the optical disc 36 are written into the main memory 16. The main memory 16 is also used as a working memory for the control unit 14. The bus 12 is used for communicating addresses and data among the units of the consumer game machine 11.

The image processing unit 18 includes a VRAM, and renders a game screen in the VRAM based on image data supplied from the control unit 14. The screen rendered in the VRAM is converted into video signals, and the signals are then output to the display unit 32.

The input/output processing unit 20 is an interface for the control unit 14 to access the audio processing unit 22, the optical disc drive 24, the hard disk 26, the communication interface 28, and the controller 30. The audio processing unit 22 includes a sound buffer, and outputs, from the audio output unit 34, audio data loaded from the optical disc 36 into the sound buffer. The communication interface 28 is an interface for connecting the consumer game machine 11 by wire or wireless to a communication network, such as the Internet.

The optical disc drive 24 reads programs and data recorded in the optical disc 36. In this specification, the optical disc 36 is used to supply programs and data to the consumer game machine 11, but another information storage medium (such as memory card) may be used. Further, for example, programs and data may be supplied to the consumer game machine 11 from a remote location via a communication network. The hard disk 26 is a commonly-used hard disk device (auxiliary storage device). It should be noted that the programs and data that are described as being stored in the optical disc 36 may be stored in the hard disk 26 instead.

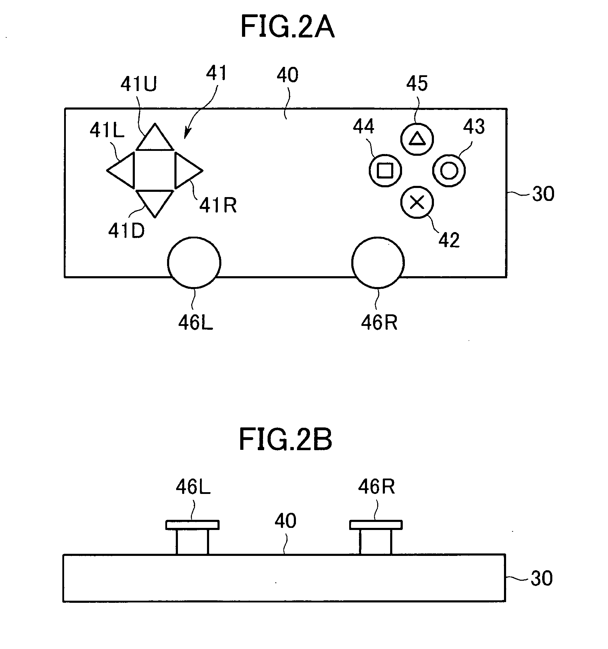

The controller 30 is an operating unit which is operated by a player. A plurality of controllers 30 can be connected to the consumer game machine 11 by wire or wireless. FIGS. 2A and 2B are diagrams illustrating an example of the controller 30. As illustrated in FIGS. 2A and 2B, a surface 40 of the controller 30 includes a plurality of operation members. For example, the surface 40 of the controller 30 includes a direction button group 41, buttons 42, 43, 44, and 45, and sticks (levers) 46L and 46R.

The direction button group 41 is used for an operation of specifying a direction, for example. The direction button group 41 includes an up button 41U corresponding to an upward direction, a down button 41D corresponding to a downward direction, a left button 41L corresponding to a leftward direction, and a right button 41R corresponding to a rightward direction. The buttons 42, 43, 44, and 45 are used for various game operations. Surfaces of the buttons 42, 43, 44, and 45 are marked with symbols x, circle, square, and triangle, respectively. The sticks 46L and 46R are used, for example, to specify a direction. The sticks 46L and 46R stand erect on the front side 40 of the casing of the controller 30, and can be tilted freely in a 360-degree direction from the erect state.

The input/output processing unit 20 scans a state of each of the operation members of the controller 30 at fixed intervals (for example, every 1/60th of a second), and then supplies an operation signal representing scan results to the control unit 14 via the bus 12. Based on the operation signal, the control unit 14 determines a game operation performed by the player.

The game device 10 runs various games. In an example of the games run on the game device 10, a player character who acts as operated by the player fights with another character. Described below is a case where the game device 10 runs an action game in which the player character fights off an opponent character.

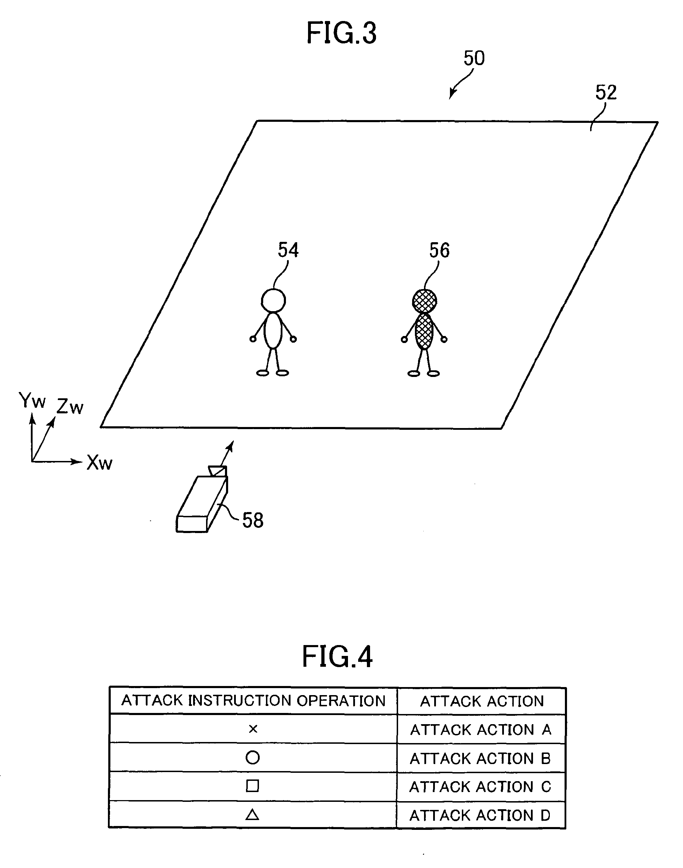

A virtual space (a game space) is built in the main memory 16 of the game device 10. FIG. 3 illustrates an example of the virtual space. The virtual space 50 of FIG. 3 is a virtual three-dimensional space in which three orthogonal coordinate axes (an Xw-axis, a Yw-axis, and a Zw-axis) are set. The positions and the like of objects placed in the virtual space 50 are identified by coordinate values of these three coordinate axes.

A ground object 52 which represents the ground is placed in the virtual space 50 of FIG. 3. A player character object 54 which represents the player character and an opponent character object 56 (other-character object) which represents an opponent character are placed on the ground object 52.

A virtual camera 58 is also set in the virtual space 50. An image showing a scene of the virtual space 50 viewed from the virtual camera 58 is displayed on the game screen. The position and line-of-sight direction of the virtual camera 58 are updated based on the position of the player character object 54 so that the player character object 54 is displayed on the game screen all the time.

The opponent character object 56 acts under control of artificial intelligence (AI). The player character object 54, on the other hand, acts as operated by the player. For example, the player character obj ect 54 moves in the virtual space 50 in accordance with a moving instruction operation made by the player. To give another example, the player character object 54 performs an attack action in accordance with an attack instruction operation made by the player.

FIG. 4 is a diagram illustrating an example of the association relation between an attack instruction operation made by the player and an attack action performed by the player character object 54. In FIG. 4, symbols x, circle, square, and triangle represent the buttons 42, 43, 44, and 45, respectively. The game device 10 may be designed in a manner that allows the player to set an association relation of their choice between an attack instruction operation and an attack action.

In the association relation of FIG. 4, the button 42 is associated with an attack action A. The player character object 54 therefore performs the attack action A when the player presses the button 42. Specifically, in a case where the button 42 is pressed, animation data (motion data) that corresponds to the attack action A is read out of the optical disc 36 to be played, and the player character object 54 consequently performs the attack action A.

Animation data is data that defines changes in state (for example, posture and position) that occur to the player character object 54 while in action. The optical disc 36 stores animation data for various actions that can be performed by the player character object 54. In the example of FIG. 4, four pieces of animation data respectively corresponding to attack actions A, B, C, and D are stored in the optical disc 36. Herein, making the player character object 54 perform an action by changing the state of the player character object 54 in the manner defined by the animation data is referred to as "playing animation data".

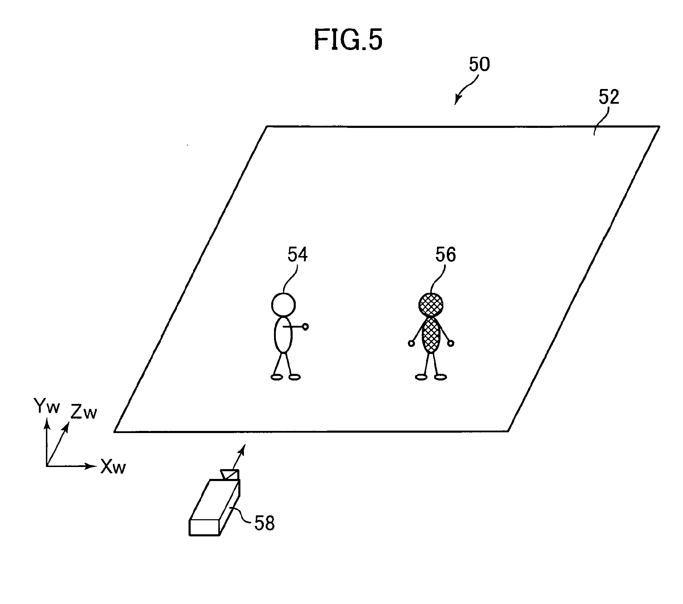

FIG. 5 illustrates an example of the virtual space 50 in the case where the player presses the button 42. In other words, FIG. 5 illustrates the player character object 54 performing the attack action A. The attack action A is an action that includes a punching action in the example of FIG. 5.

If an attack executed by the player character object 54 successfully hits the opponent character object 56, the hit points of the opponent character decrease. "Hit points" are a parameter indicating howmuch stamina (energy) is left in the opponent character. For example, the hit points range from 0 to 100 and are initially set to 100. If the hit points of an opponent character reach a given value (zero), it means that the opponent character is beaten and the opponent character object 56 is removed from the virtual space 50.

If an attack executed by the opponent character object 56 hits the player character object 54, on the other hand, the hit points of the player character decrease. An example of an event that occurs when the hit points of the player character reach a given value (zero) is game over.

The following description is about a technology for displaying the player character performing a plurality of actions in succession on the game screen of the game device 10 described above while reducing an increase in data amount.

In the game device 10, when the player presses the button 43 while the player character object 54 is performing the attack action A, for example, another player character object 54 which is separate from the player character object 54 performing the attack action A is placed in the virtual space 50 to perform the attack action B, which is associated with the button 43.

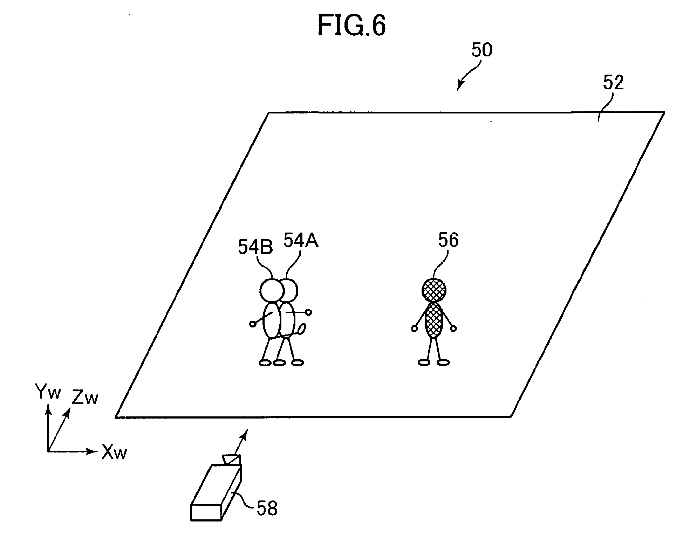

FIG. 6 illustrates an example of the virtual space 50 in this case. Two player character objects 54A and 54B are placed in the virtual space 50 of FIG. 6. The player character object 54A corresponds to the player character obj ect 54 of FIG. 5, and performs the attack action A. The player character object 54B is the newly placed player character object 54, and performs the attack action B. The attack action B in the example of FIG. 6 includes a kicking action.

In this case, the position of the player character object 54B is set based on the position of the player character object 54A at the time the button 43 is pressed. Specifically, the player character object 54B is disposed at a position where the player character object 54A is located at the time the button 43 is pressed. The position of the player character object 54B in FIG. 6 is slightly shifted from the position of the player character object 54A for the convenience of description.

In this case, the hit points of opponent character decrease both when the attack executed by the player character object 54A successfully hits the opponent character object 56, and when the attack executed by the player character object 54B successfully hits the opponent character object 56.

In this case, the hit points of the player character decrease only when an attack executed by the opponent character object 56 hits the later placed player character obj ect 54B. In other words, the hit points of the player character decrease when an attack executed by the opponent character object 56 hits the player character object 54A.

In this case, the player character obj ect 54A gradually changes with time from an opaque state to a transparent state. The player character object 54A becomes completely transparent upon finishing the attack action A, and then the player character object 54A is removed from the virtual space 50. The player character obj ect 54B, on the other hand, gradually changes with time from a transparent state to an opaque state. The player character object 54B becomes completely opaque upon finishing the attack action B. The player character object 54B is the target of the players operation from then on.

In the case where the player further presses the button 43 in the state of FIG. 6, a new player character object 54 which is separate from the player character objects 54A and 54B is placed to start the attack action B associated with the button 43.

In short, when the player makes an attack instruction operation while n (n is an integer equal to or larger than 1) player character objects 54 are performing their respective attack actions, a new player character object 54 separate from the n player character objects 54 is placed, and then the new player character object 54 starts an attack action that is associated with the attack instruction operation.

In the case of FIG. 6, the player character that performs the attack action A and the player character that performs the attack action B are displayed superimposed on each other on the game screen. The time required to perform the attack action A is relatively short and it therefore looks to the player as though the player character performs the attack action A and the attack action B in succession. The game device 10 can thus show the player character performing a plurality of actions in succession on the game screen without preparing intermediate animation data.

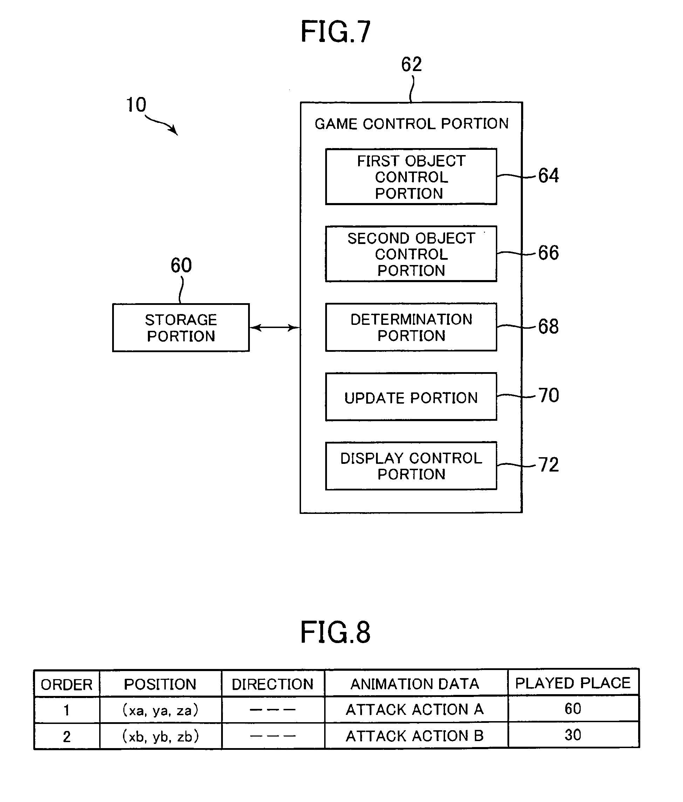

What follows is a description on a configuration for implementing the functions described above. FIG. 7 is a functional block diagram illustrating functions that are implemented in the game device 10. As illustrated in FIG. 7, the game device 10 includes a storage portion 60 and a game control portion 62. For example, the storage portion 60 is implemented by at least one of the main memory 16, the optical disc 36, and the hard disk 26, and the game control portion 62 is implemented by the control unit 14 executing a program.

The storage portion 60 is described first. The storage portion 60 stores data necessary for running a game. For example, the storage portion 60 stores model data of each object placed in the virtual space 50. The storage portion 60 also stores, for example, animation data of the player character object 54 and the opponent character object 56.

Game situation data indicating the current situation of the game is also stored in the storage portion 60. For example, the following information is held in the game situation data:

• Information on the state (position, for example) of the player character object 54
• Information on the state (position, for example) of the opponent character object 56
• Hit points of the player character
• Hit points of the opponent character

In this embodiment, a plurality of player character objects 54 are placed in the virtual space 50 in some cases as described above (see FIG. 6). In this embodiment, for example, data illustrated in FIG. 8 is used for managing state information of at least one player character object 54 placed in the virtual space 50. The contents of the data of FIG. 8 correspond to the state of FIG. 6.

The data of FIG. 8 includes fields for "order", "position", "direction", "animation data", and "played place". The "order" field shows a place in the order in which the player character objects 54 are placed in the virtual space 50. For example, the player character 54 that has "1" as the value of the "order" field corresponds to the player character object 54A in FIG. 6, and the player character object 54 that has "2" as the value of the "order" field corresponds to the player character object 54B in FIG. 6.

The "position" field shows the current position of the player character object 54. The "direction" field shows a direction that the player character obj ect 54 currently faces. The "animation data" field shows the type of animation data that is being played for the player character object 54 at present. For example, when the player character object 54 is performing the attack action A based on animation data of the attack action A, information indicating the attack action A is registered in the "animation data" field. The "played place" field shows which frame in the animation data is being played at present.

The game control portion 62 will be described.

The game control portion 62 executes game control. The game control portion 62 includes a first object control portion 64, a second object control portion 66, a determination portion 68, an update portion 70, and a display control portion 72.

The first object control portion 64 will be described. In the case where the player makes one of different types of operations which are associated with a plurality of actions (the first operation) when only one player character object 54 is placed in the virtual space 50 and the one player character object 54 is performing none of the plurality of actions, the first object control portion 64 causes the one player character object 54 to perform an action associated with the first operation (the first action).

In this embodiment, the attack instruction operations of FIG. 4 correspond to the "different types of operations" and the attack actions of FIG. 4 correspond to the "plurality of actions". In other words, in this embodiment, in the case where the player performs one of the attack instruction operations (the first attack instruction operation) when only one player character object 54 is placed in the virtual space 50 and the one player character object 54 is performing none of the attack actions, the first object control portion 64 causes the one player character object 54 to perform an attack action associated with the first attack instruction operation (the first attack action).

The second object control portion 66 will be described. In the case where the player makes one of the different types of operations described above (the second operation) while the player character object 54 is performing the first action, the second object control portion 66 places another player character object 54 in the virtual space 50 separately from the player character object 54 performing the first action, and causes the new player character object 54 to perform an action associated with the second operation (the second action).

In short, in the case where the player makes one of different types of operations while n (n is an integer equal to or larger than 1) player character objects 54 are each performing one of a plurality of actions, the second object control portion 66 places a new player character object 54 (the (n+1)-th player character object 54) in the virtual space 50 separately from the n player character objects 54, and causes the new player character object 54 to perform an action that is associated with the operation made by the player.

As mentioned above, the attack instruction operations of FIG. 4 correspond to the "different types of operations" and the attack actions of FIG. 4 correspond to the "plurality of actions" in this embodiment. This means that in this embodiment, in the case where the player makes one of the attack instruction operations (the second attack instruction operation) while one player character object 54 is performing the first attack action associated with the first attack instruction operation, the second object control portion 66 places a new player character obj ect 54 (e.g., the player character object 54B in FIG. 6) in the virtual space 50 separately from the player character object performing the first attack action (e.g., the player character object 54A in FIG. 6), and causes the new player character object 54 to perform an attack action associated with the second attack instruction operation (the second attack action).

The determination portion 68 and the update portion 70 will be described.

The determination portion 68 determines whether or not an attack executed by the player character object 54 has successfully hit the opponent character object 56. In the case where a plurality of player character objects 54 are placed in the virtual space 50, the determination portion 68 determines for each of the plurality of player character objects 54 whether or not an attack executed by the player character object 54 has successfully hit the opponent character object 56.

When it is determined that an attack executed by the player character object 54 has successfully hit the opponent character obj ect 56, the update portion 70 updates the parameter of the opponent character. In this embodiment hit points correspond to "parameter".

In the example of FIG. 6, the determination portion 68 determines whether or not an attack executed by the player character object 54A has successfully hit the opponent character object 56. When it is determined that an attack executed by the player character object 54A has successfully hit the opponent character object 56, the update portion 70 decreases the hit points of the opponent character. The determination portion 68 also determines whether or not an attack executed by the player character object 54B has successfully hit the opponent character object 56. When it is determined that an attack executed by the player character object 54B has successfully hit the opponent character object 56, too, the update portion 70 decreases the hit points of the opponent character.

The determination portion 68 also determines whether or not an attack executed by the opponent character object 56 has hit the player character object 54. In the case where a plurality of player character objects 54 are placed in the virtual space 50, this determination by the determination portion 68 is made only for one of the plurality of player character objects 54 that has been placed last. In other words, the determination portion 68 determines whether or not an attack executed by the opponent character object 56 has hit the last placed player character object 54.

When it is determined that an attack executed by the opponent character object 56 has hit the player character object 54, the update portion 70 updates the parameter of the player character. In the case where a plurality of player character objects 54 are placed in the virtual space 50, the update portion 70 updates the parameter of the player character only when an attack executed by the opponent character object 56 hits one of the plurality of player character objects 54 that has been placed last. The update portion 70 does not update the parameter of the player character if an attack executed by the opponent character object 56 hits other player character objects 54 than the last placed player character object 54. As mentioned above, hit points correspond to "parameter" in this embodiment.

In the example of FIG. 6, the determination portion 68 determines whether or not an attack executed by the opponent character object 56 has hit the player character object 54B, which is placed latest of the player character objects 54A and 54B. When it is determined that an attack executed by the opponent character object 56 has hit the player character object 54B, the update portion 70 decreases the hit points of the player character. The update portion 70 does not decrease the hit points of the player character when an attack executed by the opponent character object 56 hits the player character object 54A.

The display control portion 72 will be described. The display control portion 72 controls the display unit 32 to display as the game screen a screen showing a picture obtained by viewing the virtual space 50 from the virtual camera 58. In the case where a plurality of player character objects 54 are placed in the virtual space 50, the display control portion 72 controls the display unit 32 to display as the game screen a screen showing a picture obtained by viewing from the virtual camera 58 the virtual space 50 where the plurality of player character objects 54 are placed.

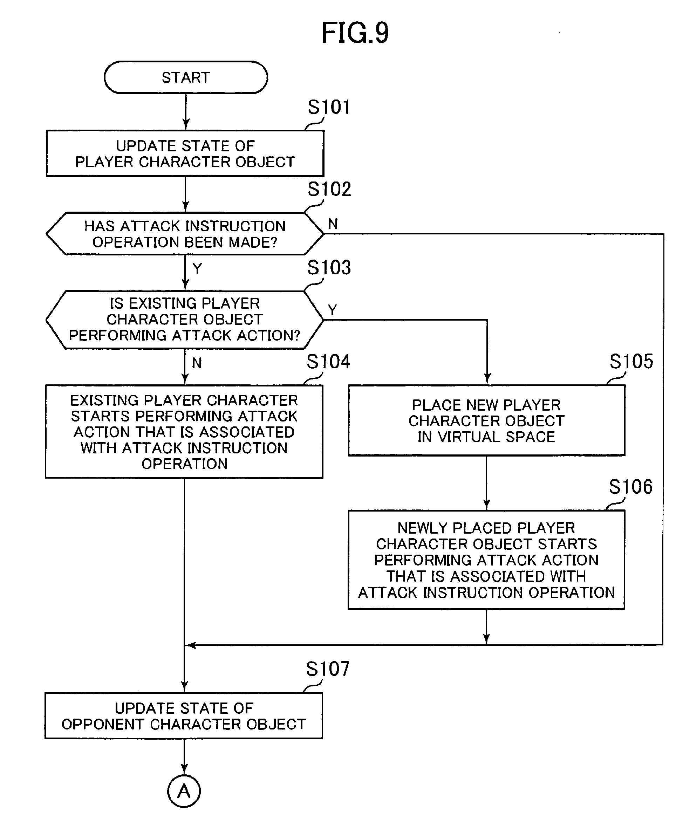

Processing executed in the game device 10 will be described next. FIGS. 9, 10, and 11 are flow charts illustrating processing that is executed in the game device 10 at given time intervals (for example, 1/60th of a second intervals). The control unit 14 executes the processing of FIGS. 9 to 11 in accordance with a program read out of the optical disc 36, to thereby function as the game control portion 62.

As illustrated in FIG. 9, the control unit 14 updates the state of the player character object 54 (S101). For example, whether or not a moving instruction operation has been made is determined, and when it is determined that a moving instruction operation has been made, the control unit 14 updates the position of the player character object 54. To give another example, the control unit 14 updates the current played place in animation data that is being played for the player character object 54.

After Step S101 is executed, the control unit 14 determines whether or not an attack instruction operation has been made (S102). Specifically, the control unit 14 determines whether or not one of the attack instruction operations of FIG. 4 has been made based on an operation signal supplied from the controller 30. If it is determined that no attack instruction operation has been made, the control unit 14 executes Step S107, which is described later.

If it is determined that an attack instruction operation has been made, the control unit 14 determines whether or not the existing player character object 54 already placed in the virtual space 50 is performing an attack action (S103). This determination is made based on the data of FIG. 8.

In this embodiment, the case where the existing player character object 54 is not performing an attack action is the case where only one player character object 54 is placed in the virtual space 50 and this player character object 54 is not performing any attack action. Accordingly, if it is determined that the existing player character object 54 is not performing an attack action, the control unit 14 (the first object control portion 64) causes the existing player character object 50 to start an attack action that is associated with the attack instruction operation made by the player (S104). Specifically, the control unit 14 reads animation data of an attack action that is associated with the attack instruction operation made by the player and starts playing the animation data for the existing player character object 54.

The control unit 14 in this case updates the data of FIG. 8. Specifically, information indicating animation data of an attack action that is associated with the attack instruction operation made by the player is registered in the "animation data" field of a record that is associated with the existing player character obj ect 54. A value "1" is also stored in the "played place" field of the added record.

If it is determined that the existing player character object 54 is performing an attack action, on the other hand, the control unit 14 (the second object control portion 66) places a new player character object 54 in the virtual space 50 separately from the existing player character object 54 (S105).

The control unit 14 in this case adds a new record to the data of FIG. 8. A number obtained by adding 1 to the number of existing player character objects 54 which have been placed in the virtual space 50 is registered in the "order" field of the newly added record.

If there is one existing player character object 54 placed in the virtual space 50, a position and direction based on the position and direction of the existing player character object 54 are registered in the "position" field and "direction" field of the added record. For example, the position and direction of the existing player character object 54 are registered in the "position" field and "direction" field of the added record. If there are two or more existing player character objects 54 placed in the virtual space 50, on the other hand, a position and direction based on the position and direction of one of the existing player character objects 54 that has been placed last are registered in the "position" field and "direction" field of the added record. For example, the position and direction of the last placed player character object 54 are registered in the "position" field and "direction" field of the added record. Executing this processing sets the position and direction of the newly placed player character object 54 based on the position and direction of the existing player character object 54.

After Step S105 is executed, the control unit 14 (the second object control portion 66) causes the player character object 54 newly placed in Step S105 to start an attack action that is associated with the attack instruction operation made by the player (S106). Specifically, the control unit 14 reads animation data of an attack action that is associated with the attack instruction operation made by the player, and starts playing the animation data for the player character object 54 newly placed in Step S105.

The control unit 14 in this case updates the data of FIG. 8. Specifically, information indicating animation data of an attack action that is associated with the attack instruction operation made by the player is registered in the "animation data" field of the record newly added in Step S105. A value "1" is also stored in the "played place" field of the added record.

In the case where Step S104 or S106 is executed, the control unit 14 updates the state of each opponent character object 56 placed in the virtual space 50 (S107). For example, the control unit 14 causes each opponent character object 56 placed in the virtual space 50 to act under control of AI. The control unit 14 causes the opponent character object 56 to, for example, move or perform an attack action.

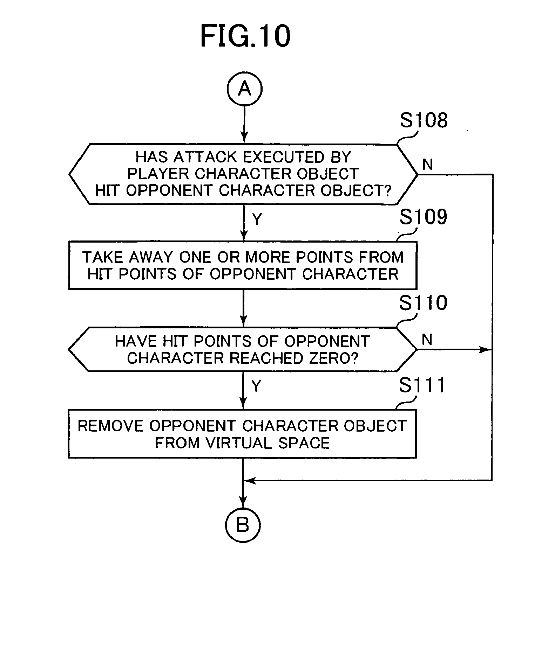

In the case where Step 107 is executed, the control unit 14 (the determination portion 68) determines whether or not an attack executed by the player character object 54 has successfully hit the opponent character object 56 as illustrated in FIG. 10 (S108). This determination processing is executed for each player character object 54 that is performing an attack action.

For example, the control unit 14 executes collision detection processing between the opponent character object 56 and a part of the player character object that has been used for the attack based on the positions of the player character object 54 and the opponent character object 56. In the case where the player character object 54 is holding a weapon, the control unit 14 executes collision detection processing between the opponent character object 56 and the weapon. In the case where the attack action performed by the player character object 54 is an action that involves launching assault measures (bullets, for example), the control unit 14 executes collision detection processing between the opponent character object 56 and the assault measures.

The control unit 14 determines whether or not an attack executed by the player character object 54 has successfully hit the opponent character object 56 based on a result of the collision detection processing. If it is not determined that an attack executed by the player character object 54 has successfully hit the opponent character object 56, the control unit 14 executes Step S112, which is described later.

If it is determined that an attack executed by the player character object 54 has successfully hit the opponent character object 56, on the other hand, the control unit takes away some points from the hit points of the opponent character (S109). The control unit 14 in this case reads information showing the association relation between the type of attack and the value of damage inflicted by the attack out of the optical disc 36, and determines the value of damage caused to the opponent character based on the type of the attack that has hit the opponent character obj ect 56. The control unit 14 then takes away points equivalent to the determined value of damage from the hit points of the opponent character.

For example, in the case where an attack executed by the player character object 54A and an attack executed by the player character object 54B both successfully hit the opponent character object 56 in the state of FIG. 6, the control unit 14 calculates the value of damage caused to the opponent character from the attack by the player character object 54A based on the type of the attack executed by the player character object 54A. The control unit 14 further calculates the value of damage caused to the opponent character from the attack by the player character object 54B based on the type of the attack executed by the player character object 54B. The control unit 14 then takes away points equivalent to the sum of those damage values from the hit points of the opponent character.

In the case where Step S109 is executed, the control unit 14 determines whether or not the hit points of the opponent character have reached zero (S110). If the hit points of the opponent character are zero, the control unit 14 removes the opponent character object 56 representing the opponent character from the virtual space 50 (S111), and executes Step S112 described later. If the hit points of the opponent character are not zero, the control unit 14 executes Step S112 described later without executing step S111.

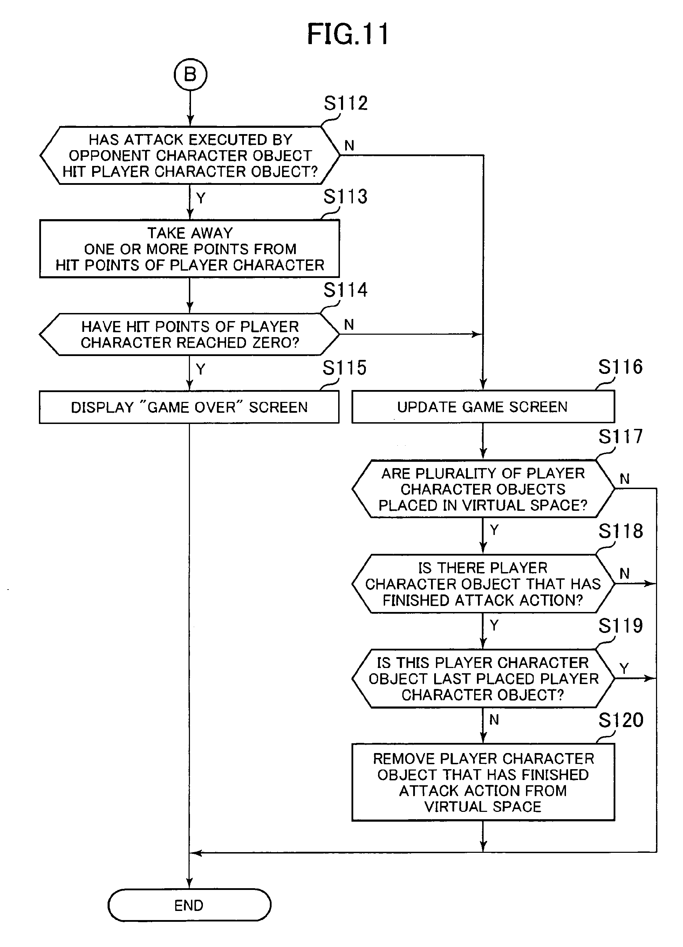

After the processing of FIG. 10 is executed, the control unit 14 (the determination portion 68) determines whether or not an attack executed by the opponent character object 56 has hit the player character object 54 as illustrated in FIG. 11 (S112). In the case where a plurality of player character objects 54 are placed in the virtual space 50, the control unit 14 determines whether or not an attack executed by the opponent character object 56 has hit one of the plurality of player character objects 54 that has been placed last. The processing of determining whether or not an attack executed by the opponent character object 56 has hit the player character object 54 is accomplished the same way as when determining whether or not an attack executed by the player character object 54 has hit the opponent character object 56 (see Step S108 of FIG. 10).

If it is not determined that an attack executed by the opponent character object 56 has hit player character object 54, the control unit 14 executes Step S116, which is described later. If it is determined that an attack executed by the opponent character object 56 has hit player character obj ect 54, on the other hand, the control unit 14 takes away some points from the hit points of the player character (S113). The control unit 14 in this case reads information showing the association relation between the type of attack and the value of damage inflicted by the attack out of the optical disc 36, and determines the value of damage caused to the player character based on the type of the attack that has hit the player character object 54. The control unit 14 then takes away points equivalent to the determined value of damage from the hit points of the player character.

In the case where Step S113 is executed, the control unit 14 determines whether or not the hit points of the player character have reached zero (S114). If the hit points of the player character are zero, the control unit 14 causes the display unit 32 to display a "game over" screen (S115). Then this processing is ended.

If the hit points of the player character are not zero, on the other hand, the control unit 14 updates the game screen (S116) Specifically, the control unit 14 generates an image that shows the scene obtained by viewing the virtual space 50 from the virtual camera 58 in the VRAM. The image generated in the VRAM is displayed as the game screen on the display unit 32.

In the case where a plurality of player character objects 54 are placed in the virtual space 50, the control unit 14 sets an alpha value of each of the plurality of player character objects 54 in the manner described below. The alpha value is a numerical value indicating the transparency (the degree of transparency or translucency) and takes a value from 0 to 255, for example, with the maximum value (255) corresponding to a completely opaque state and the minimum value (0) corresponding to a completely transparent state. In other words, a smaller alpha value indicates a higher transparency.

For instance, the alpha value ($\alpha$) of one of the plurality of player character objects 54 that has been placed last is set based on the following Expression (1).

$$\alpha = 255 * (f/F) \ \dots \ (1)$$

In Expression (1), "255" is the maximum value of the alpha value, "*" is a multiplication sign, and "f" represents the current played place in animation data that is being played for the player character object 54 at present, namely, animation data of an attack action that is being performed by the player character object 54 at present. If the thirtieth frame of animation data is being played, for example, "f" is "30". "F" represents the total frame count of animation data that is being played for the player character object 54 at present.

Through setting of the alpha value of the last placed player character object 54 based on Expression (1), the transparency of the last placed player character object 54 gradually drops with time. In other words, the last placed player character object 54 gradually changes with time from a transparent state to an opaque state. The last placed player character object 54 then turns completely opaque upon finishing the attack action (at the time the animation data finishes playing).

The alpha value ($\alpha$) of any other player character object 54 than the last placed player character object 54 is, on the other hand, set based on the following Expression (2). In Expression (2), "255", "*", "f", and "F" are the same as in Expression (1).

$$\alpha=255*((F-f)/F) \quad \ldots \quad (2)$$

Through setting of the alpha value of the player character object 54 that is not the last placed player character object 54 based on Expression (2), the transparency of the player character object 54 that is not the last placed player character object 54 gradually rises with time. In other words, the player character object 54 that is not the last placed player character object 54 gradually changes with time from an opaque state to a transparent state. The player character object 54 that is not the last placed player character object 54 then turns completely transparent upon finishing the attack action (at the time the animation data finishes playing).

After Step S116 is executed, the control unit 14 determines whether or not a plurality of player character objects 54 are placed in the virtual space 50 (S117). In the case where a plurality of player character objects 54 are not placed in the virtual space 50, the control unit 14 ends this processing.

If it is determined that aplurality of player character objects 54 are placed in the virtual space 50, the control unit 14 determines whether or not there is at least one player character object 54 that has finished its assigned attack action (S118). If there is no player character object 54 that has finished its assigned attack action, the control unit 14 ends this processing.

If there is at least one player character object 54 that has finished its assigned attack action, the control unit 14 determines whether or not this player character obj ect 54 is the player character object 54 that has been placed latest of all the player character objects placed in the virtual space 50 (S119). In the case where the player character object 54 that has finished its assigned attack action is the last placed player character object 54, the control unit 14 ends this processing.

In the case where the player character object 54 that has finished its assigned attack action is not the last placed player character obj ect 54, the control unit 14 removes the player character object 54 that has finished its assigned attack action from the virtual space 50 (S120). The control unit 14 in this case deletes a record that is associated with the player character object 54 that has finished its assigned attack action from the data of FIG. 8. The removal of the player character object 54 that has finished its assigned attack action in this case also necessitates an update of the value of the "order" field for each record remaining in the data of FIG. 8, and the control unit 14 also updates the value of the "order" field for each record remaining in the data of FIG. 8. This processing is thus completed.

The game device 10 described above can display a player character performing a plurality of actions in succession on a game screen without preparing intermediate animation data. According to the game device 10, displaying a player character performing apluralityof actions in succession on the game screen is accomplished while reducing an increase in data amount.

Preparing many pieces of intermediate animation data also increases the amount of work required to develop a game. With the game device 10 which eliminates the need to prepare intermediate animation data, the amount of work required to develop a game in which a player character performing a plurality of actions in succession is displayed on a game screen is reduced as well.

Conventionally, a game device designed in a manner that allows a player to set an association relation of their choice to the association relation of FIG. 4 needs to prepare intermediate animation data by considering in advance settings that might be set by the player. The resultant problem is an increase in data amount and in the amount of work required to develop a game. The game device 10 which eliminates the need to prepare intermediate animation data is free from this problem.

The present invention is not limited to the embodiment described above.

(A) For example, the update portion 70 may set the magnitude of damage caused to the opponent character when an attack executed by the player character obj ect 54 hits the opponent character object 56 to a magnitude that corresponds to a transparency set to the player character object 54. For instance, damage caused to the opponent character when an attack executed by the player character object 54 hits the opponent character object 56 may be set smaller (or larger) when the transparency of the player character object 54 is higher.

In this case, the storage portion 60 stores information showing the association relation between a transparency (an alpha value) and information used to obtain the hit point update amount of the opponent character. The stored association relation is, for example, the following Expression (3).

$$k=\alpha/128 \quad \ldots \quad (3)$$

In Expression (3), "$\alpha$" represents a transparency (an alpha value) set to the player character object 54 that has executed an attack that has hit the opponent character object 56, and "128" is an intermediate value between the maximum alpha value and the minimum alpha value.

Expression (3) is information showing the association relation between a transparency (an alpha value) and a coefficient (k). In Expression (3), the value of the coefficient (k) is larger when the transparency is lower. The coefficient (k) is used to calculate the hit point update amount of the opponent character, which is described later.

The value (D) of damage inflicted on the opponent character is determined in this case based on, for example, the following Expression (4). In Expression (4), "Do" represents a base value of damage which is associated with the type of an attack that has hit the opponent character object 56.

$$D = Do * k \quad ... \quad (4)$$

Processing executed in Step S109 of FIG. 11 in this case is as follows. Specifically, the control unit 14 first reads information showing the association relation between a type of attack and a base value of damage inflicted by the attack out of the optical disc 36 to obtain a base value (Do) of damage that is associated with the type of the attack that has hit the opponent character object 56. The control unit 14 next obtains a transparency (an alpha value) set to the player character object 54 that has executed an attack that has hit the opponent character object 56. The control unit 14 further obtains a coefficient (k) value corresponding to the obtained transparency based on Expression (3). The control unit 14 then uses Expression (4) to calculate the value of damage inflicted on the opponent character. This damage value is equivalent to points to be taken away from the hit points of the opponent character.

The information showing the association relation between a transparency (an alpha value) and a coefficient (k) may be table-format information. In other words, information in a table format may be stored instead of Expression (3).

(B) For example, the update portion 70 may set the magnitude of damage caused to the player character when an attack executed by the opponent character object 56 hits the player character object 54 to a magnitude that corresponds to a transparency set to the player character object 54. For instance, damage caused to the player character when an attack executed by the opponent character object 56 hits the player character object 54 may be set smaller (or larger) when the transparency of the player character object 54 is higher. In this Modification Example (B), the same method as the one described in Modification Example (A) is used.

(C) For example, limitations may be set on the time at which the player is to make the second operation. Specifically, the time at which the player is to make the second operation may be limited to a reference time set within a period for which the first action performed by the player character object 54 lasts.

"Reference time" may be determined in advance or may be determined by the game control portion 62 each time. The player may receive guidance on "reference time" in the form of display output or audio output. Alternatively, the controller 30 that has a vibration function may be vibrated to give the player guidance on "reference time".

In this case, only when the player makes the second operation at a reference time set within a period for which the first action performed by the player character object 54 lasts, the second object control portion 66 places a new player character object 54 in the virtual space 50 separately from the player character object 54 performing the first action, and causes the new player character object 54 to perform the second action.

Limitations may also be put on which operation is to be made by the player as the second operation. For instance, "operation to be made by the player as the second operation" may be limited to a predetermined operation, or to an operation determined by the game control portion 62 each time. More specifically, "operation to be made by the player as the second operation" may be, for example, an operation selected in advance from the different types of attack instruction operations of FIG. 4. "Operation to be made by the player as the second operation" may also, for example, be selected each time at random from the different types of attack instruction operations of FIG. 4. The player may receive guidance on "operation to be made by the player as the second operation" in the form of display output or audio output.

In this case, only when the player makes an operation that is set as the operation to be made as the second operation at a reference time set within a period for which the first action performed by the player character object 54 lasts, the second object control portion 66 places a new player character object 54 in the virtual space 50 separately from the player character object 54 performing the first action, and causes the new player character object 54 to perform the second action.

(D) For example, in the case where a plurality of player character objects 54 are placed in the virtual space 50, the display control portion 72 may set different colors to different player character objects 54.

For example, the display control portion 72 may set for each player character object 54 a color based on the place of the player character object 54 in question in the order in which the plurality of player character objects 54 are placed in the virtual space 50 (in other words, based on what number the player character object 54 in question is). To give a concrete example, the color of the first player character object 54 (e.g., the player character object 54A in FIG. 6) may be set to red while the color of the second player character object 54 (e.g., the player character object 54B in FIG. 6) may be set to blue, and the color of the third player character obj ect 54 may be set to green. The storage portion 60 in this example stores information showing the association relation between a place in the placement order and a color, and the display control portion 72 sets a color to each player character object 54 based on the stored information.

In the case where many translucent player character objects 54 are placed in the virtual space 50, many transparent player characters are displayed on top of one another on the game screen, which may makes it difficult for the player to distinguish individual player characters (individual player character objects 54) from one another. According to Modification Example (4), however, the player can distinguish individual player characters (individual player character objects 54) from one another with ease.

In the processing of FIGS. 9 to 11, the player character obj ect 54 that is not the one placed last in the virtual space 50 is removed from the virtual space 50 upon finishing an action and, ultimately, the player character object 54 placed last in the virtual space 50 alone remains in the virtual space 50 (Steps S117 to S120 of FIG. 11). The display control portion 72 may gradually return the color of the player character object 54 that ultimately remains in the virtual space 50 to an original color which the player character object 54 originally have.

For example, after all other player character objects 54 are removed, the color of the player character object 54 that ultimately remains in the virtual space 50 may be changed gradually with time to the original color. Alternatively, the color of the player character obj ect 54 that is going to be ultimately left in the virtual space 50 may be changed toward the original color as the player character objects 54 placed in the virtual space 50 are removed one by one (in other words, as the number of player character objects 54 placed in the virtual space 50 decreases). In this case, the color of the player character object 54 that ultimately remains in the virtual space 50 finishes turning into the original color at the time when the other player character objects 54 are all gone. The storage portion 60 in this case stores information showing the association relation between the number of player character objects 54 placed in the virtual space 50 and the color of the player character object 54 that is going to be ultimately left in the virtual space 50, and the stored information is used to set the color of the player character object 54 that is going to be ultimately left in the virtual space 50.

(E) In the embodiment described above, the player character loses some of its hit points only when an attack executed by the opponent character object 56 hits the player character object 54 that has been placed latest of a plurality of player character objects 54 placed in the virtual space 50.

The game device 10 may instead be designed so that the hit points of the player character decrease when an attack executed by the opponent character object 56 hits other player character objects 54 than the last placed player character object 54. For example, the hit points of the player character may decrease only when an attack executed by the opponent character object 56 hits the player character object 54 that has been placed earliest of a plurality of player character objects 54 placed in the virtual space 50. The game device 10 may also be designed so that the hit points of the player character decrease when an attack executed by the opponent character object 56 hits whichever of the plurality of player character objects 54.

(F) In the embodiment described above, the hit points of the opponent character decrease when an attack executed by whichever of a plurality of player character objects 54 placed in the virtual space 50 hits the opponent character object 56.

The game device 10 may instead be designed so that the hit points of the opponent character decrease only when an attack executed by a particular player character object 54 among a plurality of player character objects 54 placed in the virtual space 50 hits the opponent character object 56. For example, one or more points may be taken away from the hit points of the opponent character only when an attack executed by the player character object 54 that has been placed latest of the plurality of player character objects 54 placed in the virtual space 50 hits the opponent character object 56. Alternatively, one or more points may be taken away from the hit points of the opponent character only when an attack executed by the first placed player character object 54 hits the opponent character object 56.

(G) In the embodiment described above, the player character object 54 that is not the one placed latest of a plurality of player character objects 54 placed in the virtual space 50 is removed from the virtual space 50 upon finishing an attack action (see Steps S117 to S120 of FIG. 11). In other words, the last placed player character object 54 remains in the virtual space 50.

The game device 10 may instead be designed so that the player character object 54 that has been placed earliest of a plurality of player character objects 54 placed in the virtual space 50 remains in the virtual space 50. In other words, the player character obj ect 54 that is not the one placed earliest of a plurality of player character objects 54 placed in the virtual space 50 may be removed from the virtual space 50 upon finishing an attack action.

Alternatively, the plurality of player character objects 54 may be removed so that the player character obj ect 54 that has finished its assigned attack action first is removed first. In other words, the player character object 54 that has finished its assigned attack action last among the plurality of player character objects 54 placed in the virtual space 50 may remain in the virtual space 50.

(H) For example, the association relation between an attack instruction operation (the buttons 42, 43, 44, and 45) and an attack action may be varied. To give an example, when the player presses the buttons 42, 43, 44, and 45 in succession, the attack action associated with the button 42 may be varied depending on whether the button 42 is the first button pressed or the second button pressed. For instance, the attack action associated with the button 42 may be the attack action A when the button 42 is the first button pressed, while the attack action associated with the button 42 may be the attack action D when the button 42 is the second button pressed.

The game device 10 may also be designed in a manner that allows the player to set an association relation of their choice to the association relation between an attack instruction operation and an attack action. Conventionally, a game device designed in a manner that allows a player to set an association relation of their choice to the association relation needs to prepare intermediate animation data by considering in advance settings that might be set by the player. The resultant problem is an increase in data amount and in the amount of work required to develop a game. The game device 10 which eliminates the need to prepare intermediate animation data is free from this problem.

(I) For example, damage points which indicate accumulated damage to the opponent character may be stored instead of the hit points of the opponent character. Damage points differ from hit points in that whereas one or more points are taken away from hit points each time the opponent character object 56 is attacked, one or more points are added to damage points each time the opponent character object 56 is attacked. The damage points range from 0 to 100 and are initially set to 0. When the damage points reach a given value (100), it means that the opponent character is beaten. Similarly, damage points indicating accumulated damage to the player character may be stored instead of the hit points of the player character.

(J) The present invention is also applicable to other games than the action game described above.

While there have been described what are at present considered to be certain embodiments of the invention, it will be understood that various modifications may be made thereto, and it is intended that the appended claims cover all such modifications as fall within the true spirit and scope of the invention.

**Claims**

1. A game device for displaying, on display means, as a game screen of a game in which a player character acts based on an operation of a player, a screen that shows a picture obtained by viewing from a virtual camera a virtual space where a player character object representing the player character is placed, comprising:

first object control means for causing, in a case where the player makes a first operation, the player character object representing the player character to perform a first action associated with the first operation;
second object control means for placing, in a case where the player makes a second operation while the player character object is performing the first action, a player character object representing the player character in the virtual space separately from the player character object that performs the first action, and causing the separately placed player character object to perform a second action associated with the second operation; and
display control means for controlling the display means to display, as the game screen, a screen showing a picture obtained by viewing from the virtual camera the virtual space where the player character object that performs the first action and the player character object that performs the second action are both placed.

2. The game device according to claim 1, wherein the second object control means sets a position of the player character object that is placed separately from the player character object that performs the first action based on a pos i t ion that the player character object that performs the first action is in when the second operation is made.

3. The game device according to claim 1 or 2, wherein the game involves a fight between the player character and another character, wherein an other-character object representing the other character is placed in the virtual space, wherein the first action and the second action are actions of attacks on the other-character object, wherein the game device further comprises update means for updating a parameter that is updated in a case where an attack executed by the player character object hits the other-character object and that is stored in means for storing the parameter, and wherein, in a case where the player character object that performs the first action and the player character object that performs the second action are both placed in the virtual space, the update means updates the parameter based on both a result of determining whether or not an attack executed by the player character object that performs the first action has hit the other-character object, and a result of determining whether or not an attack executed by the player character object that performs the second action has hit the other-character object.

4. The game device according to claim 1 or 2, wherein the game involves a fight between the player character and another character, wherein an other-character object representing the other character is placed in the virtual space, wherein the game device further comprises update means for updating a parameter that is updated in a case where an attack executed by the other-character object hits the player character object and that is stored in means for storing the parameter, and wherein, in a case where the player character object that performs the first action and the player character object that performs the second action are both placed in the virtual space, the update means is configured to execute an update of the parameter based on one of a result of determining whether or not an attack executed by the other-character object has hit the player character object that performs the first action, and a result of determining whether or not an attack executed by the other-character object has hit the player character object that performs the second action, and not to execute an update of the parameter based on another result thereof.

5. The game device according to claim 1 or 2, wherein, in a case where the player character object that performs the first action and the player character object that performs the second action are both placed in the virtual space, the display control means raises with time a transparency of the player character object that performs the first action, and lowers with time a transparency of the player character object that performs the second action.

6. The game device according to claim 5, wherein the game involves a fight between the player character and another character, wherein an other-character object representing the other character is placed in the virtual space, wherein the first action and the second action are actions of attacks on the other-character object, wherein the game device further comprises update means for updating a parameter that is updated in a case where an attack executed by the player character object hits the other-character object and that is stored in means for storing the parameter, and wherein the update means comprises at least one of:

   means for setting an update amount of the parameter in a case where an attack executed by the player character object that performs the first action hits the other-character object to an amount corresponding to the transparency of the player character object that performs the first action; and
   means for setting an update amount of the parameter in a case where an attack executed by the player character object that performs the second action hits the other-character object to an amount corresponding to the transparency of the player character object that performs the second action.

7. The game device according to claim 5, wherein the game involves a fight between the player character and another character, wherein an other-character object representing the other character is placed in the virtual space, wherein the game device further comprises update means for updating a parameter that is updated in a case where an attack executed by the other-character object hits the player character object and that is stored in means for storing the parameter, and wherein the update means comprises at least one of:

   means for setting an update amount of the parameter in a case where an attack executed by the other-character object hits the player character object that performs the first action to an amount corresponding to the transparency of the player character object that performs the first action; and
   means for setting an update amount of the parameter in a case where an attack executed by the other-character object hits the player character object that performs the second action to an amount corresponding to the transparency of the player character object that performs the second action.

8. The game device according to anyone of claims 1 to 7, wherein, in a case where the player character object that performs the first action and the player character object that performs the second action are both placed in the virtual space, the display control means sets different colors to the player character object that performs the first action and the player character object that performs the second action.

9. The game device according to any one of claims 1 to 8, further comprising any one of:

   means for removing, in a case where the player character object that performs the first action and the player character object that performs the second action are both placed in the virtual space, the player character object that has performed the first action from the virtual space if the player character object that performs the first action finishes the first action;

means for removing, in the case where the player character obj ect that performs the first action and the player character obj ect that performs the second action are both placed in the virtual space, the player character object that has performed the second action from the virtual space if the player character object that performs the second action finishes the second action; and

means for removing, in the case where the player character obj ect that performs the first action and the player character obj ect that performs the second action are both placed in the virtual space, the player character object that has performed the first action from the virtual space if the player character object that performs the first action finishes the first actionbefore the player character object that performs the second action finishes the second action, and for removing the player character object that has performed the second action from the virtual space if the player character object that performs the second action finishes the second action before the player character object that performs the first action finishes the first action.

10. A game device control method for displaying, on display means, as a game screen of a game in which a player character acts based on an operation of a player, a screen that shows a picture obtained by viewing from a virtual camera a virtual space where a player character obj ect representing the player character is placed, comprising:

causing, in a case where the player makes a first operation, the player character object representing the player character to perform a first action associated with the first operation;

placing, in a case where the player makes a second operation while the player character object is performing the first action, a player character object representing the player character in the virtual space separately from the player character object that performs the first action, and causing the separately placed player character object to perform a second action associated with the second operation; and

controlling the display means to display, as the game screen, a screen showing a picture obtained by viewing from the virtual camera the virtual space where the player character object that performs the first action and the player character object that performs the second action are both placed.

11. A program for causing a computer to function as a game device for displaying, on display means, as a game screen of a game in which a player character acts based on an operation of a player, a screen that shows a picture obtained by viewing from a virtual camera a virtual space where a player character object representing the player character is placed, the program causing the computer to function as:

first object control means for causing, in a case where the player makes a first operation, the player character object representing the player character to perform a first action associated with the first operation;

second object control means for placing, in a case where the player makes a second operation while the player character object is performing the first action, a player character object representing the player character in the virtual space separately from the player character object that performs the first action, and causing the separately placed player character object to perform a second action associated with the second operation; and

display control means for controlling the display means to display, as the game screen, a screen showing a picture obtained by viewing from the virtual camera the virtual space where the player character object that performs the first action and the player character object that performs the second action are both placed.

12. A computer-readable information storage medium storing the program according to claim 11.

# FIG.1

CONTROL UNIT — 14

IMAGE PROCESSING UNIT — 18

DISPLAY UNIT — 32

12

MAIN MEMORY — 16

INPUT/OUTPUT PROCESSING UNIT — 20

CONTROLLER — 30

··· CONTROLLER — 30

AUDIO PROCESSING UNIT — 22

OPTICAL DISC DRIVE — 24

HARD DISK — 26

COMMUNICATION INTERFACE — 28

11

10

AUDIO OUTPUT UNIT — 34

36

EP 2 545 971 A2

# FIG.2A

# FIG.2B

# FIG.3

# FIG.4

| ATTACK INSTRUCTION OPERATION | ATTACK ACTION |
|:---:|:---:|
| × | ATTACK ACTION A |
| ○ | ATTACK ACTION B |
| □ | ATTACK ACTION C |
| △ | ATTACK ACTION D |

# FIG.5

# FIG.6

# FIG.7

GAME CONTROL PORTION — 62

FIRST OBJECT CONTROL PORTION — 64

SECOND OBJECT CONTROL PORTION — 66

DETERMINATION PORTION — 68

UPDATE PORTION — 70

DISPLAY CONTROL PORTION — 72

STORAGE PORTION — 60

10

# FIG.8

| ORDER | POSITION | DIRECTION | ANIMATION DATA | PLAYED PLACE |
|-------|----------|-----------|----------------|--------------|
| 1 | (xa, ya, za) | — — — | ATTACK ACTION A | 60 |
| 2 | (xb, yb, zb) | — — — | ATTACK ACTION B | 30 |

# FIG.9

```
                    ┌─────────────┐
                    │    START    │
                    └──────┬──────┘
                           │                    S101
                    ┌──────▼──────────────┐
                    │   UPDATE STATE OF   │
                    │ PLAYER CHARACTER    │
                    │      OBJECT         │
                    └──────┬──────────────┘
                           │                    S102
                  ╱────────▼──────────╲    N
                 ╱  HAS ATTACK          ╲──────────────────────────┐
                 ╲  INSTRUCTION         ╱                          │
                  ╲ OPERATION BEEN MADE?╱                          │
                   ╲─────────┬─────────╱                           │
                           Y │          S103                       │
                  ╱──────────▼────────╲   Y                        │
                 ╱  IS EXISTING PLAYER  ╲─────────────┐            │
                 ╲  CHARACTER OBJECT     ╱            │            │
                  ╲ PERFORMING ATTACK    ╱            │            │
                   ╲ ACTION?            ╱             │            │
                    ╲────────┬────────╱               │            │
                           N │     S104               │           │
          ┌──────────────────▼───────┐     S105       │           │
          │ EXISTING PLAYER CHARACTER│   ┌────────────▼─────┐      │
          │ STARTS PERFORMING ATTACK │   │  PLACE NEW PLAYER │     │
          │ ACTION THAT IS ASSOCIATED│   │  CHARACTER OBJECT │     │
          │ WITH ATTACK INSTRUCTION  │   │  IN VIRTUAL SPACE │     │
          │ OPERATION                │   └────────┬─────────┘      │
          └──────────┬───────────────┘            │       S106     │
                     │                  ┌─────────▼──────────────┐ │
                     │                  │ NEWLY PLACED PLAYER    │ │
                     │                  │ CHARACTER OBJECT STARTS│ │
                     │                  │ PERFORMING ATTACK ACTION│ │
                     │                  │ THAT IS ASSOCIATED WITH │ │
                     │                  │ ATTACK INSTRUCTION      │ │
                     │                  │ OPERATION               │ │
                     │                  └─────────┬──────────────┘ │
                     │◄───────────────────────────┴────────────────┘
                     │                   S107
          ┌──────────▼──────────────┐
          │   UPDATE STATE OF        │
          │ OPPONENT CHARACTER OBJECT│
          └──────────┬──────────────┘
                     │
                   ( A )
```

# FIG.10

(A)

S108

HAS ATTACK EXECUTED BY
PLAYER CHARACTER OBJECT
HIT OPPONENT CHARACTER OBJECT?  — N

Y

S109

TAKE AWAY ONE OR MORE POINTS FROM
HIT POINTS OF OPPONENT CHARACTER

S110

HAVE HIT POINTS OF OPPONENT
CHARACTER REACHED ZERO?  — N

Y

S111

REMOVE OPPONENT CHARACTER OBJECT
FROM VIRTUAL SPACE

(B)

# FIG.11

(B)

S112
HAS ATTACK EXECUTED BY OPPONENT CHARACTER OBJECT HIT PLAYER CHARACTER OBJECT? — N

Y S113
TAKE AWAY ONE OR MORE POINTS FROM HIT POINTS OF PLAYER CHARACTER

S114
HAVE HIT POINTS OF PLAYER CHARACTER REACHED ZERO? — N

Y S115
DISPLAY "GAME OVER" SCREEN

S116
UPDATE GAME SCREEN

S117
ARE PLURALITY OF PLAYER CHARACTER OBJECTS PLACED IN VIRTUAL SPACE? — N

Y S118
IS THERE PLAYER CHARACTER OBJECT THAT HAS FINISHED ATTACK ACTION? — N

Y S119
IS THIS PLAYER CHARACTER OBJECT LAST PLACED PLAYER CHARACTER OBJECT? — Y

N S120
REMOVE PLAYER CHARACTER OBJECT THAT HAS FINISHED ATTACK ACTION FROM VIRTUAL SPACE

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2003024633 A